# FASCICULE DE BREVET EUROPEEN

(11) **EP 2 577 032 B1**
(45) Date de publication et mention de la délivrance du brevet: **31.10.2018**
(21) Numéro de dépôt: 11726916.7
(22) Date de dépôt: 27.05.2011
(51) Int. Cl.: F02K 1/12, F02K 1/72, F02K 1/76

(54) **ENSEMBLE COMPRENANT UN DISPOSITIF D'INVERSION DE POUSSÉE ET UN SYSTÈME D'ACTIONNEMENT DUDIT DISPOSITIF**
ANORDNUNG MIT EINER SCHUBUMKEHRVORRICHTUNG UND SYSTEM ZUR BETÄTIGUNG DIESER VORRICHTUNG
ASSEMBLY INCLUDING A REVERSE THRUST DEVICE AND SYSTEM FOR ACTUATING SAID DEVICE

(30) Priorité: 01.06.2010 FR 1054274
(43) Date de publication de la demande: 10.04.2013
(73) Titulaire: Safran Nacelles, 76700 Gonfreville-l'Orcher (FR)
(72) Inventeur: VAUCHEL, Guy, Bernard, 76700 Harfleur (FR); GONIDEC, Patrick, 31530 Bretx (FR)
(74) Mandataire: Gaillarde, Frédéric F. Ch.
(86) Numéro de dépôt international: PCT/FR2011/051220
(87) Numéro de publication internationale: WO 2011/151579

(56) Documents cités:
- FR-A1- 2 622 929
- FR-A1- 2 902 839
- FR-A1- 2 917 788
- US-A- 3 797 785
- US-A1- 2010 126 139

## Description

La présente invention concerne un système d'actionnement d'un dispositif d'inversion de poussée à tuyère variable d'une nacelle de turboréacteur et une nacelle comprenant un tel système d'actionnement.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un dispositif d'inversion de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des éléments mobiles déplaçables entre, d'une part, une position déployée dans laquelle ils ouvrent dans la nacelle un passage destiné au flux dévié, et d'autre part, une position d'escamotage dans laquelle ils ferment ce passage.

Ces éléments mobiles peuvent remplir une fonction de déviation ou simplement d'activation d'autres moyens de déviation.

Dans le cas d'un inverseur à grilles de déviation, la réorientation du flux d'air est effectuée par des grilles de déviation, associées à des volets d'inversion, le capot n'ayant qu'une simple fonction de coulissage visant à découvrir ou recouvrir ces grilles de déviation.

Les volets d'inversion, quant à eux, forment des portes de blocage pouvant être activées par le coulissement du capot engendrant une fermeture de la veine en aval des grilles, de manière à optimiser la réorientation du flux d'air froid.

Par ailleurs, outre sa fonction d'inversion de poussée, le capot coulissant appartient à la section arrière et présente un côté aval formant la tuyère d'éjection visant à canaliser l'éjection des flux d'air.

Cette tuyère fournit la puissance nécessaire pour la propulsion en imprimant une vitesse aux flux d'éjection et module la poussée en faisant varier sa section de sortie en réponse à des variations du réglage de la puissance du moteur et des conditions de vol

Cette tuyère d'éjection comprend une série de panneaux mobiles montés en rotation à une extrémité aval du capot coulissant.

Ces panneaux sont adaptés pour pivoter vers une position entraînant une variation de section de la tuyère.

La cinématique d'actionnement du capot et d'une telle tuyère est complexe.

En effet, la tuyère étant montée sur le capot mobile, les panneaux mobiles doivent être associés à un système d'actionnement permettant, d'une part, de les entrainer simultanément et de façon synchronisée avec le capot mobile lors de l'inversion de poussée lorsque le capot se déplace pour découvrir les grilles de déviation et, d'autre part, de les entraîner lorsque le capot est en position d'escamotage pour adapter la section optimale de la tuyère d'éjection en fonction des différentes phases de vol, à savoir les phases de décollage, de croisière et d'atterrissage de l'avion.

On connaît plusieurs systèmes d'actionnement dédiés pour répondre à la cinématique particulière désirée d'une tuyère variable et d'un capot mobile, tels que divulgués dans les publications FR 2 917 788 A1 et FR 2 902 839 A1.

Or, ils ne sont pas satisfaisants.

En effet, on connait des nacelles à tuyère lisse translatante dans lesquelles le système d'actionnement de la tuyère et de la structure d'inversion de poussée comprend des moyens d'actionnement associés à des moyens de verrouillage.

Ces moyens de verrouillage comprennent, d'une part, un verrouillage amont destiné à verrouiller la structure d'inversion sur la structure fixe de la nacelle pendant les phases de variation de section de tuyère et de jet direct.

Ils comprennent, en outre, un verrouillage aval destiné, d'une part, à verrouiller la structure d'inversion et la tuyère, ceci afin d'assurer un verrouillage des deux structures lors des phases de jet direct et, d'autre part, à libérer la tuyère de la structure d'inversion, ceci afin qu'elle translate vers l'aval de la nacelle pour augmenter la section de sortie de la tuyère.

Dans ce type de système d'actionnement, pour réaliser l'inversion de poussée, il est nécessaire de déplacer en amont la tuyère alors en position ouverte puis de verrouiller la tuyère et la structure d'inversion et de déverrouiller le verrouillage amont pour libérer la structure d'inversion et permettre son déplacement vers l'aval de façon mutuel avec la tuyère.

Or, ces opérations de verrouillage/déverrrouillage sont consommatrices de temps de part le nombre de manoeuvres nécessaires.

De plus, on constate que les performances acoustiques sont diminuées.

Un but de la présente invention est de pallier les problèmes définis ci-dessus.

Ainsi, un but de la présente invention est de proposer un système d'actionnement d'un dispositif d'inversion de poussée et de variation de section de tuyère minimal, simplifié et efficace qui simplifie les manoeuvres d'actionnement de la tuyère et de la structure d'inversion.

Il est également désirable d'offrir un système d'actionnement qui diminue les pertes de performances acoustiques dudit dispositif d'inversion de poussée.

Un autre but de la présente invention est de proposer un système d'actionnement s'affranchissant de toute fermeture de la tuyère pour réaliser l'inversion de poussée.

Il est également important d'offrir un système d'actionnement dans lequel les déplacements des actionneurs pendant les phases de manoeuvre de la tuyère variable et de la structure d'inversion sont maîtrisés.

A cet effet, l'invention propose un dispositif d'inversion de poussée et un système d'actionnement du dispositif d'inversion de poussée selon la revendication 1. Le dispositif comprenant au moins un capot mobile monté en translation selon une direction sensiblement parallèle à un axe longitudinal d'une nacelle apte à passer alternativement d'une position de fermeture dans laquelle il assure la continuité aérodynamique de la nacelle à une position d'ouverture dans laquelle il ouvre un passage dans la nacelle destiné à un flux dévié, ledit capot mobile étant également prolongé par au moins une section de tuyère variable, ladite tuyère comprenant au moins un panneau monté mobile en rotation, ledit panneau étant adapté pour pivoter vers au moins une position entraînant une variation de la section de la tuyère, le système d'actionnement comprenant des moyens d'actionnement aptes à activer le déplacement respectif du capot et du panneau de la tuyère en translation et en rotation remarquable en ce que le système d'actionnement comprend, en outre, des moyens de verrouillage aval de la tuyère et du capot, les moyens de verrouillage aval comprenant au moins deux états réversibles, l'un desdits état étant un état verrouillé dans lequel les moyens de verrouillage sont adaptés pour verrouiller le panneau de la tuyère en position de variation de section de sortie de tuyère avec le capot.

Selon des modes particuliers de réalisation, l'ensemble peut comprendre l'une ou plusieurs des caractéristiques suivantes:
- les moyens de verrouillage aval sont dans un état déverrouillé en jet direct et lors des phases de variation de section de tuyère et, inversement, dans un état verrouillé en jet inversé pour permettre le déplacement de la tuyère avec le capot vers l'aval de la nacelle ;
- le système comprend, en outre, des moyens de verrouillage amont comprenant au moins deux états réversibles, l'un desdits états étant un état verrouillé dans lequel les moyens de verrouillage amont sont adaptés pour maintenir le capot, en position de fermeture solidaire d'une structure fixe de la nacelle ;
- les moyens de verrouillage amont sont dans un état verrouillé en jet direct et lors des phases de variation de section de tuyère et, inversement dans un état déverrouillé en jet inversé permettant le déplacement du capot vers l'aval de la nacelle ;
- les moyens d'actionnement sont aptes à activer le déplacement en translation du capot et le pivotement du panneau de la tuyère vers une position entraînant la variation de la section de la tuyère indépendamment du déplacement du capot;
- les moyens d'actionnement comprennent un actionneur linéaire comprenant une base à l'intérieur de laquelle est logée une tige destinée à être fixée à l'extrémité amont du panneau de la tuyère ;
- les moyens de verrouillage aval sont montés, en partie, sur les moyens d'actionnement ;
- un moyen de préhension est monté sur la tige de l'actionneur et un crochet est monté, en vis-à-vis, sur le capot ;
- les moyens de verrouillage aval sont montés, en partie, sur le panneau de la tuyère ;
- un moyen de préhension est monté sur une extrémité amont du panneau et un crochet est monté, en vis-à-vis, sur le capot ;
- le système comprend, en outre, des moyens de commande aptes à piloter les moyens d'actionnement et les moyens de verrouillage amont et aval ;
- les moyens de commande comprennent un système électrique monté sur une structure fixe de la nacelle entraînant un système de renvoi rotatif vers les moyens de verrouillage aval.

L'invention propose également une nacelle de turboréacteur double flux comprenant un dispositif d'inversion de poussée équipé d'un système d'actionnement tel que précité.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- La figure 1 est une représentation schématique en coupe longitudinale d'un dispositif d'inversion de poussée selon un premier mode de réalisation de la présente invention dans une position de section de tuyère augmentée ;
- Les figures 2 et 3 sont des représentations du dispositif d'inversion de poussée de la figure 1 dont les moyens de verrouillage amont entre un capot et une structure fixe de nacelle sont respectivement en état verrouillé et en état déverrouillé;

- La figure 4 est une représentation du dispositif d'inversion de poussée de la figure 1 dans une position d'inversion de poussée ;
- Les figures 5 à 7 sont des représentations schématiques en coupe longitudinale d'un dispositif d'inversion de poussée selon un second mode de réalisation de la présente invention dans une position de croisière, dans une position de section de tuyère augmentée et dans une position de jet inversé;
- Les figures 8 à 10 sont des représentations schématiques en coupe longitudinale du dispositif d'inversion de poussée respectivement selon les figures 5 à 7 dans lesquelles est mis en évidence un système d'entraînement de moyens de verrouillage aval du dispositif, dans une position de croisière, dans une position de section de tuyère augmentée et dans une position de jet inversé.

De façon générale, une nacelle est destinée à constituer un logement tubulaire pour un turboréacteur double flux et sert à canaliser les flux d'air qu'il génère par l'intermédiaire de pales d'une soufflante, à savoir un flux d'air chaud traversant une chambre de combustion et un flux d'air froid circulant à l'extérieur du turboréacteur.

Cette nacelle comprend une section amont formant une entrée d'air, une section médiane entourant la soufflante du turboréacteur et une section aval entourant le turboréacteur.

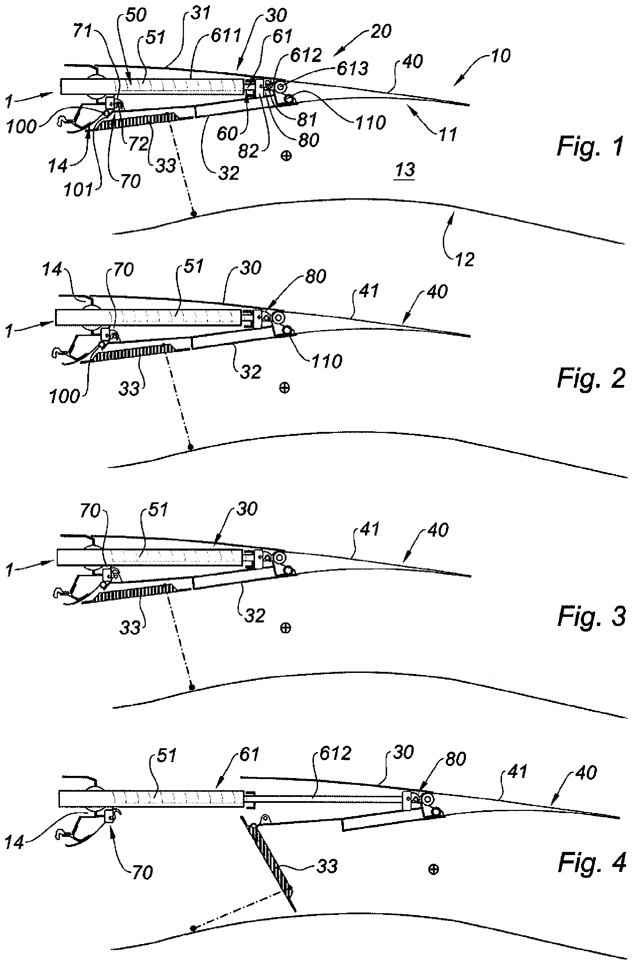

On a représenté, sur la figure 1, une partie de la section médiane et de la section aval, désignées, respectivement par les références générales 1 et 10.

Cette section aval 10 comprend une structure externe 11 comportant un dispositif d'inversion de poussée 20 et une structure interne 12 de carénage de moteur définissant avec la structure externe 11 une veine 13 destinée à la circulation d'un flux froid dans le cas de la nacelle de turboréacteur double flux telle que présentée ici.

La section aval 10 comprend, en outre, un cadre avant 14, un capot mobile 30 comprenant une virole externe 31 et une virole interne 32 et une section de tuyère d'éjection 40.

Le capot 30 est destiné à être actionné selon une direction sensiblement longitudinale de la nacelle entre une position de fermeture dans laquelle la virole interne 32 vient au contact du cadre avant 14 et la virole externe 31 vient en contact de la section médiane 1 et assure la continuité aérodynamique des lignes externes de la section aval 10 et une position d'ouverture dans laquelle il ouvre un passage dans la nacelle et découvre des moyens de déviation 50.

Ce capot 30 permet au flux secondaire du turboréacteur de s'échapper au moins partiellement, cette portion de flux étant réorientée vers l'avant de la nacelle par des grilles de déviation 51, générant de ce fait une contre-poussée apte à aider au freinage de l'aéronef.

Le déplacement du capot mobile 30 se fait par un système de rail/coulisseau (non visible sur la figure) connu de l'homme de métier.

Afin d'augmenter la portion de flux secondaire traversant les grilles 51, la virole interne 32 du capot 30 comprend une pluralité de volets d'inversion 33, répartis sur sa circonférence et montés chacun pivotant par une extrémité autour d'un axe d'articulation, sur le capot 30 coulissant entre une position rétractée dans laquelle le volet 33 ferme l'ouverture et assure la continuité aérodynamique intérieure de la veine 13 et une position déployée dans laquelle, en situation d'inversion de poussée, il obture au moins partiellement la veine 13 en vue de dévier le flux froid vers les grilles 51.

Par ailleurs, la section de tuyère d'éjection 40 dans le prolongement aval du capot mobile 30 comprend une série de panneaux mobiles 41 montés en rotation à une extrémité aval du capot mobile 30 et répartis sur la périphérie de la section de tuyère d'éjection 40.

Chaque panneau 41 est adapté pour pivoter vers au moins une position entraînant une variation de la section de la tuyère 40 et, plus précisément, une position d'augmentation de section de tuyère.

Dans une variante de réalisation, chaque panneau 41 est également adapté pour pivoter également vers au moins une position entraînant une diminution de la section de la tuyère 40.

Chaque panneau 41 est porté par le capot mobile 30 par l'intermédiaire de points pivot selon un axe perpendiculaire à l'axe longitudinal de la nacelle avec la virole interne 32 du capot mobile 30 et avec ledit panneau mobile 41.

Par ailleurs, des moyens d'actionnement 60 sont aptes à activer le déplacement en translation du capot 30 et le pivotement du panneau 41 de la tuyère 40 vers une position entraînant la variation de la section de la tuyère 40 indépendamment du déplacement du capot mobile 30.

Ces moyens d'actionnement 60 comprennent au moins un actionneur 61 linéaire simple action électrique, hydraulique ou pneumatique.

Cet actionneur 61 peut être placé entre deux lignes d'attache des grilles de déviation 51.

L'actionneur 61 est apte à permettre le déplacement du capot 30 en amont ou en aval de la nacelle et assurer le pivotement des panneaux 41 de la tuyère 40 lors des phases de variation de section de tuyère 40.

Il assure ainsi, avantageusement, deux fonctions, à savoir la gestion de la section de sortie de la tuyère 40 et la gestion de l'inversion de poussée en coopération avec des moyens de verrouillage décrits plus loin.

Plus précisément, l'actionneur 61 comprend une base cylindrique 611 à l'intérieur de laquelle est logée une tige 612.

La base 611 est destinée à être rattachée à son extrémité amont, au cadre avant 14 tandis que la tige 612 est reliée, à son extrémité aval, à l'extrémité amont du panneau 41 directement par un oeillet de fixation 613 apte à permettre le pivotement d'un panneau 41 de la tuyère 40.

Dans une variante de réalisation, la tige 612 est reliée, à son extrémité aval, à l'extrémité amont du panneau 41 indirectement par l'intermédiaire de moyens d'entraînement de type bielles d'entrainement en aval de leur structure, articulées sur un axe d'entraînement transversal prévu sur sa structure.

Par ailleurs, tel qu'illustré sur la figure 1, le système d'actionnement comprend un double système de verrouillage.

Ce système comprend, d'une part, des moyens de verrouillage amont 70 comprenant au moins deux états réversibles, l'un desdits état étant un état verrouillé dans lequel les moyens de verrouillage 70 amont sont adaptés pour maintenir le capot 30, en position fermé, solidaire avec la structure fixe de la nacelle.

D'autre part, il comprend des moyens de verrouillage aval 80 comprenant au moins deux états réversibles, l'un desdits état étant un état verrouillé dans lequel la tuyère 40 est verrouillée avec le capot 30.

Lesdits moyens de verrouillage amont 70 et aval 80 se composent d'éléments coopérants respectivement solidaires de chaque partie à solidariser et sont d'un type connu et couramment utilisés tels que des verrous à griffes ou à crochet dont les éléments constitutifs ne seront pas détaillés plus en détail par la suite.

Concernant les moyens de verrouillage amont 70, un crochet 71 est monté sur la structure fixe, avantageusement sur le cadre avant 14, et l'élement complémentaire c'est-à-dire un moyen de préhension 72 sur l'extrémité amont du capot 30 en vis-à-vis pour coopérer.

Ces moyens de verrouillage amont 70 sont, tel qu'illustré sur la figure 1, dans un état verrouillé lors des phases en jet direct c'est-à-dire, notamment, en phase de croisière et lors des phases de variation de section de tuyère 40 et, inversement, tel qu'illustré sur la figure 4, dans un état déverrouillé lors des phase d'inversion de poussée permettant le déplacement du capot 30 vers l'aval de la nacelle.

Il maintient ainsi solidaire la structure fixe 14 et le capot 30 pendant l'ouverture de la tuyère 40 et dans les phases de jet direct de l'aéronef.

Dans une variante de réalisation, ces moyens de verrouillage amont 70 peuvent également assurer la fonction de verrouillage des volets d'inversion 33 en phase de croisière.

Concernant les moyens de verrouillage aval 80, ils sont adaptés pour n'avoir à utiliser qu'un actionneur 61 simple action au lieu de vérins double action ou de doubles vérins pour déplacer le capot 30 et la tuyère 40 et, d'autre part, pour assurer directement le passage d'une position de variation de section de tuyère 40 à une position d'inversion de poussée.

Ainsi, ils comprennent un état verrouillé dans lequel ils sont adaptés pour permettre le verrouillage de la tuyère 40 en position de variation de section de tuyère 40 avec le capot mobile, et, plus précisément, en position de section de tuyère 40 augmentée comme illustré sur la figure 2, ceci afin de passer d'une position de variation de section de tuyère 40 à une position d'inversion de poussée du capot 30.

Ces moyens de verrouillage aval 80 sont, tel qu'illustré sur les figures 1 à 4, dans un état déverrouillé lors des phases en jet direct c'est-à-dire, notamment, en phase de croisière et lors des phases de variation de section de tuyère 40 et, inversement, tel qu'illustré sur la figure 4, dans un état verrouillé lors des phases d'inversion de poussée permettant le deplacement de la tuyère 40 avec le capot 30 vers l'aval de la nacelle.

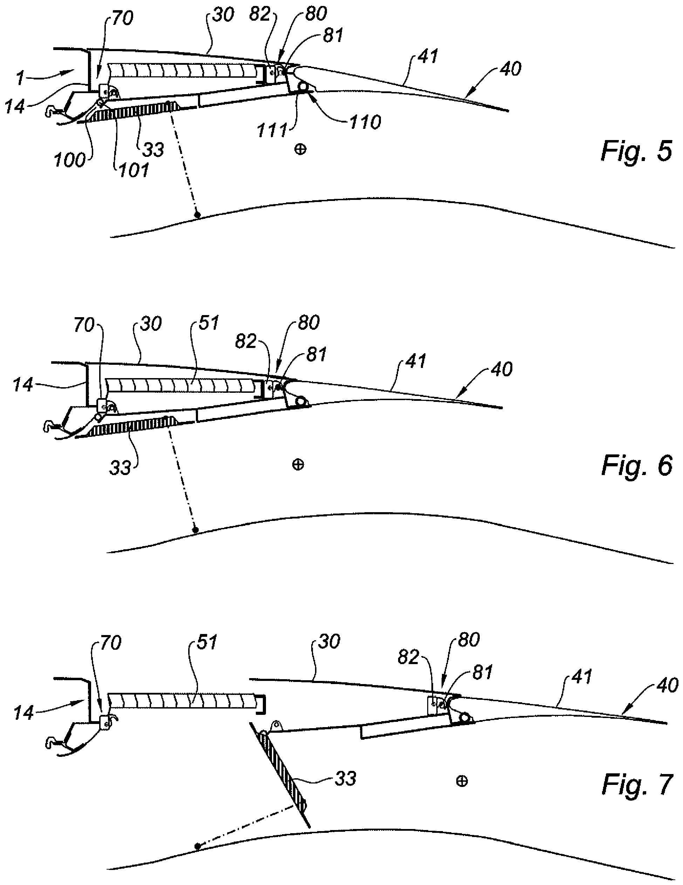

Dans un premier mode de réalisation illustré sur les figures 5 à 7, les moyens de verrouillage aval 80 sont montés par rapport à la structure du panneau 41 de la tuyère 40, à l'extrémité aval des grilles 51 ou du cadre arrière des grilles, s'il existe.

Ils sont ainsi assujettis à la position du panneau 41 de la tuyère 40.

Plus précisément, ils comprennent un moyen de préhension 81 monté sur l'extrémité amont du panneau 41 en vis-à-vis d'un élement crochet 82 monté sur la virole interne 32 du capot 30 lorsque le panneau 41 est dans une position de section de la tuyère 40 ouverte.

Ces éléments complémentaires 81 et 82 sont adaptés pour coopérer c'est à dire se verrouiller lorsque la tuyère 40 est en phase de variation de section de tuyère 40, comme illustré sur les figures 5 et 6.

Dans un second mode de réalisation illustré sur les figures 1 à 4, les moyens de verrouillage aval 80 sont montés sur la structure de l'actionneur 60.

Ils sont ainsi assujettis au déploiement de l'actionneur et, plus précisément, à la position de la tige 612 de l'actionneur 61.

La tige 612 comprend au moins d'un côté un moyen de préhension 81 en excroissance monté en vis-à-vis d'un élément de crochet 82 monté sur la virole interne 32 du capot 30 de sorte à coopérer et se verrouiller lorsque le panneau 41 de tuyère 40 est en position de section de tuyère ouverte, comme illustré sur les figures 2 et 3.

L'élément de crochet 82 peut être d'un seul côté de la tige 612 ou être transversal à la tige 612.

Si l'entraînement des panneaux 41 se fait par un système d'entraînement indirect comme un vérin dédié à l'actionnement d'au moins deux panneaux 41, les moyens de verrouillage aval 80 peuvent être montés soit comme défini précédemment, soit sur un organe intermédiaire d'entraînement des panneaux 41 comme, par exemple, des bielles d'entraînement ou sur la structure même d'un des panneaux 41.

Dans un autre mode de réalisation de la présente invention, des moyens de verrouillage (non illustrés) adaptés pour assurer le verrouillage des panneaux 41 de la tuyère 40 en phase de croisière de l'aéronef peuvent être proposés.

Avantageusement, avec une telle invention, il est possible de réaliser l'inversion de poussée et la gestion de la variation de section de tuyère 40 avec un actionneur 60 simple action tout en conservant une tuyère 40 en position de section ouverte avant le passage en phase d'inversion de poussée. On s'affranchit de toute refermeture en position nominale de la tuyère 40 avant inversion de poussée.

Ceci offre l'avantage de de ne pas dégrader la performance acoustique du dispositif 20 et optimise le temps nécessaire à la mise en place de l'inversion de poussée.

Un tel dispositif 20 offre, en outre, un système d'actionnement avec un actionneur 61 simple action simple et fiable relativement à un système d'actionnement double action ou même d'un système d'actionnement double, ce qui permet d'assurer une maîtrise de la masse de l'ensemble du dispositif 20.

Par ailleurs, en prévoyant un actionneur à simple action, le capot mobile 30 et les panneaux mobiles 41 sont actionnés avec une cinématique qui leur est propre lors du réglage de la variation de section de tuyère 40, ceci offre l'avantage de pouvoir limiter à de très faibles déplacements voire aucun les déplacements du capot mobile 30 lors des phases de pivotement du panneau mobile 41 dans une position permettant d'augmenter ou de réduire la section de la tuyère d'éjection 40.

Par ailleurs, le système d'actionnement comprend également une unité de commande apte à piloter les moyens de verrouillage amont et aval 70, 80 et l'actionneur 61 selon une séquence d'actionnement prédéterminé gérant l'ensemble des opérations de verrouillage/déverrouillage et d'actionnement.

Elle est adaptée pour activer indépendamment le pivotement des panneaux de la tuyère 40 et le déplacement du capot 30.

Une variante de réalisation peut prévoir des unités de commande indépendantes pour les moyens de verrouillage amont 70, aval 80 et l'actionneur 61.

Dans une première variante de réalisation, les moyens de verrouillage aval 80 sont associés à des moyens de commande électrique, de type alimentation continue par circuit continu (fil ou contact mécanique) ou de type alimentation discontinue par système déconnectable.

Dans une seconde variante de réalisation, les moyens de verrouillage aval 80 sont associés à des moyens de commande mécanique 90.

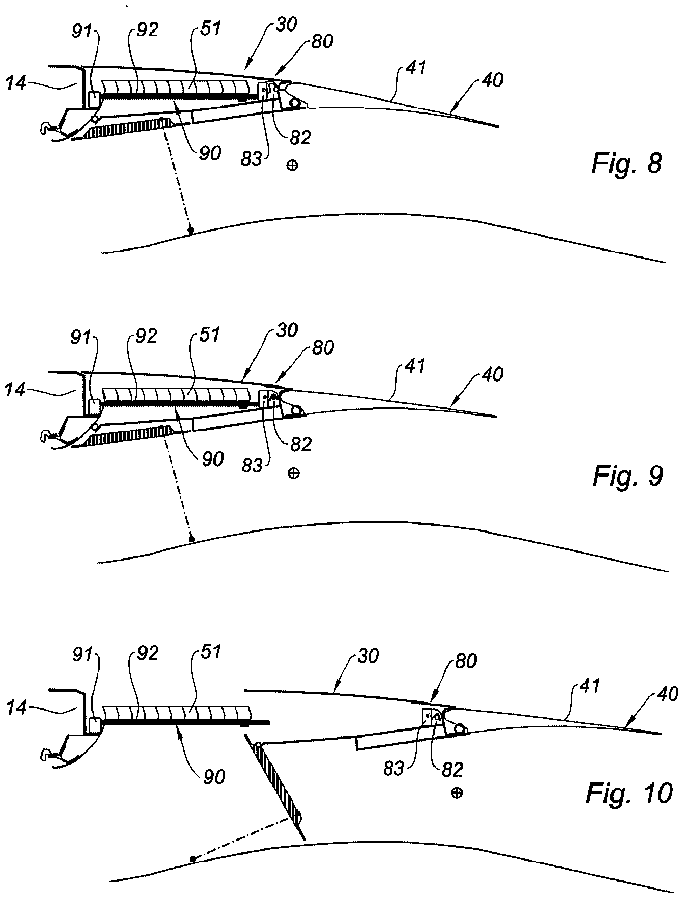

En référence aux figures 8 à 10, le système d'actionnement comprend un système électrique 91 monté sur le cadre avant 14 entraînant un système de renvoi 92 rotatif vers un bloc de verrouillage 83 du crochet 82 des moyens de verrouillage aval 80 situé en aval du capot 30.

Le système de renvoi 92 rotatif peut être porté à son aval par la structure de grilles 51 ou par le cadre arrière des grilles 51.

En phase de jet direct et de variation de section de tuyère 40 illustré sur les figures 8 et 9, le système de renvoi 92 est en interface avec le bloc de verrouillage 83, celui-ci peut être entraîné mécaniquement.

En phase d'inversion de poussée illustrée sur la figure 10, le système de renvoi 92 est déconnecté du bloc de verrouillage 83, interdisant son entraînement.

Dans les deux cas de déconnexion, on assure une fiabilité d'interdiction de déverrouillage en cours de manoeuvre d'inversion de poussée des panneaux de la tuyère 40 et du capot 30.

Le fonctionnement du dispositif d'inversion de poussée 20 est le suivant lors des phases de jet direct, de variation de section de tuyère et d'inversion de poussée pour les deux modes de réalisation différents des moyens de verrouillage aval 80.

En phase de jet direct et, plus précisément, de croisière de l'aéronef illustrée sur la figure 5, les volets d'inversion 33 sont en position rétractée et le capot 30 est en position de fermeture assurant la continuité aérodynamique avec la section médiane 1.

Les moyens de verrouillage amont 70 sont dans un état verrouillé verrouillant le capot 30 sur la structure fixe 14 de la nacelle.

Les moyens de verrouillage aval 80 sont, quant à eux, dans un état déverrouillé entre le capot 30 et la tuyère 40 tandis que l'actionneur 61 est dans une position telle que la phase croisière de l'aéronef est assurée.

En phase de variation de section de tuyère 40 et, plus précisément, d'augmentation de section de tuyère 40 illustrée sur les figures 1 et 6, le capot 30 est en position de fermeture recouvrant les grilles de déviation 51 et les volets d'inversion 33 sont en position rétractée.

Le capot 30 n'ayant pas été déplacé, les moyens de verrouillage amont 70 sont dans un état verrouillé.

L'actionneur 61 et, plus précisément, la tige 612 de l'actionneur 61 a été actionnée et rétractée vers l'amont de la nacelle entraînant alors le pivotement du panneau mobile 41 de la tuyère 40 de son pivot 42 vers l'extérieur de la veine 13 augmentant ainsi la section de la tuyère 40.

A ce stade, les moyens de verrouillage aval 80 sont, par conséquent, dans un état déverrouillé.

L'ajustement de cette section suivant l'importance du flux éjecté permet ainsi d'obtenir une optimisation du rendement et l'amélioration des performances telles que la consommation spécifique.

Lorsqu'une commande d'inversion de poussée est émise, comme illustré sur les figures 2 et 6, on verrouille, grâce aux moyens de verrouillage aval 80, la tuyère 40 en position d'augmentation de section de tuyère 40 avec le capot 30 afin de former une structure aval solidaire.

Tel qu'illustré sur la figure3, les moyens de verrouillage amont 70 passent, quant à eux, dans un état déverrouillé libérant le capot 30 de la structure fixe 14.

En référence aux figures 4 et 7, le capot 30 étant libéré et solidaire de la tuyère 40, on actionne alors la tige 612 de l'actionneur 61 en translation qui communique son mouvement à la tuyère 40 solidaire du capot 30, ceci afin de déplacer vers l'aval le capot 30.

Ce déplacement en translation vers l'aval de la nacelle du capot 30 d'une longueur sensiblement égale à la longueur des grilles de déviation 51 entraîne le pivotement des volets d'inversion 33 autour de leur pivot à l'intérieur de la veine 13 pour qu'ils jouent pleinement leur rôle d'inverseur de poussée obturant la veine 13 pour forcer l'air à se diriger au travers des grilles de déviation 51.

En référence notamment aux figures 1 et 5, le dispositif d'inversion de poussée 20 comprend, en outre, des moyens d'étanchéité amont 100 entre la veine de flux froid 13 et l'externe de la nacelle agencés sous les grilles de déviation 51.

Ces moyens d'étanchéité amont 100 sont, de préférence, portés par le capot 30.

Ils comprennent un joint d'étanchéité 101 préférentiellement porté par la virole interne 32 du capot 30 au contact du cadre avant 14.

Ceci permet d'assurer un contact étanche entre la structure fixe du dispositif 20 et le capot mobile 30 dans les phases de jet direct.

Par ailleurs, le dispositif d'inversion de poussée 20 comprend des moyens d'étanchéité aval 110 entre la veine de flux froid 13 et l'externe de la nacelle agencés entre le capot 30 et l'extrémité amont des panneaux 41 de la tuyère 40.

Ces moyens d'étanchéité aval 110 comprennent un joint d'étanchéité 111 porté par l'extrémité aval de la virole interne 32 du capot mobile 30 au contact d'un déroutage sur la face interne du panneau 41 afin d'assurer une étanchéité relative à l'interface entre le capot 30 et les panneaux 41.

Dans une variante de réalisation, les moyens d'étanchéité aval 110 peuvent être portés par le panneau mobile 41 lui-même.

## Revendications

1. Ensemble comprenant un dispositif d'inversion de poussée (20) et un système d'actionnement dudit dispositif d'inversion de poussée (20), ledit dispositif (20) comprenant au moins un capot (30) monté en translation selon une direction sensiblement parallèle à un axe longitudinal d'une nacelle apte à passer alternativement d'une position de fermeture dans laquelle il assure la continuité aérodynamique de la nacelle à une position d'ouverture dans laquelle il ouvre un passage dans la nacelle destiné à un flux dévié, ledit capot 30 étant également prolongé par au moins une section de tuyère (40) variable, ladite tuyère (40) comprenant au moins un panneau (41) monté mobile en rotation, ledit panneau (41) étant adapté pour pivoter vers au moins une position entraînant une variation de la section de la tuyère, le système d'actionnement comprenant des moyens d'actionnement (60) aptes à activer le déplacement respectif du capot (30) et du panneau (41) de la tuyère (40) en translation et en rotation, où les moyens d'actionnement (60) comprennent au moins un actionneur (61) linéaire simple action relié à l'extrémité amont du panneau (41) et le système d'actionnement comprend, en outre, des moyens de verrouillage aval (80) de la tuyère (40) et du capot (30), les moyens de verrouillage aval (80) comprenant au moins deux états réversibles, l'un desdits état étant un état verrouillé dans lequel les moyens de verrouillage aval (80) sont adaptés pour verrouiller le panneau (41) de la tuyère (40) en position de variation de section de sortie de tuyère avec le capot (30).

2. Ensemble selon la revendication 1 **caractérisé en ce que** les moyens de verrouillage aval (80) sont dans un état déverrouillé en jet direct et lors des phases de variation de section de tuyère (40) et, inversement, dans un état verrouillé en jet inversé pour permettre le déplacement de la tuyère (40) avec le capot (30) vers l'aval de la nacelle.

3. Ensemble selon l'une des revendications 1 à 2 **caractérisé en ce qu'**il comprend, en outre, des moyens de verrouillage amont (70) comprenant au moins deux états réversibles, l'un desdits état étant un état verrouillé dans lequel les moyens de verrouillage (70) amont sont adaptés pour maintenir le capot (30), en position de fermeture solidaire d'une structure fixe de la nacelle.

4. Ensemble selon l'une des revendications 1 à 3 **caractérisé en ce que** les moyens de verrouillage amont (70) sont dans un état verrouillé en jet direct et lors des phases de variation de section de tuyère (40) et, inversement dans un état déverrouillé en jet inversé permettant le déplacement du capot (30) vers l'aval de la nacelle.

5. Ensemble selon l'une des revendications 1 à 4 **caractérisé en ce que** les moyens d'actionnement (60) sont aptes à activer le déplacement en translation du capot (30) et le pivotement du panneau (41) de la tuyère (40) vers une position entraînant la variation de la section de la tuyère (40) indépendamment du déplacement du capot mobile (30).

6. Ensemble selon la revendication 5 **caractérisé en ce que** l'actionneur linéaire (61) des moyens d'actionnement (60) comprend une base à l'intérieur de laquelle est logée une tige (612) destinée à être fixée à l'extrémité amont du panneau (41) de la tuyère (40).

7. Ensemble selon l'une des revendications 1 à 6 **caractérisé en ce que** les moyens de verrouillage aval (80) sont montés, en partie, sur les moyens d'actionnement (60).

8. Ensemble selon les revendications 6 et 7 **caractérisé en ce que** un moyen de préhension est monté sur la tige (612) de l'actionneur (61) et un crochet est monté, en vis-à-vis, sur le capot (30).

9. Ensemble selon l'une des revendications 1 à 6 **caractérisé en ce que** les moyens de verrouillage aval (80) sont montés, en partie, sur le panneau (41) de la tuyère (40).

10. Ensemble selon la revendication 9 **caractérisé en ce que** un moyen de préhension est monté sur une extrémité amont du panneau et un crochet est monté, en vis-à-vis, sur le capot (30).

11. Ensemble selon l'une des revendications 1 à 10 **caractérisé en ce qu'**il comprend, en outre, des moyens de commande aptes à piloter les moyens d'actionnement (50) et les moyens de verrouillage amont (70) et aval (90).

12. Ensemble selon la revendication 11 **caractérisé en ce que** les moyens de commande comprennent un système électrique (91) monté sur une structure fixe de la nacelle entraînant un système de renvoi rotatif (92) vers les moyens de verrouillage aval (80).

13. Nacelle de turboréacteur double flux comprenant un ensemble selon l'une des revendications précédentes.

## Patentansprüche

1. Baugruppe, eine Schubumkehrvorrichtung (20) und ein System zum Betätigen der Schubumkehrvorrichtung (20) umfassend, wobei die Vorrichtung (20) mindestens eine Abdeckung (30) umfasst, die in eine im Wesentlichen parallele Richtung zu einer Längsachse einer Gondel verschiebbar montiert ist, die imstande ist, abwechselnd von einer Schließposition, in der sie für die aerodynamische Kontinuität der Gondel sorgt, in eine Öffnungsposition überzugehen, in der sie einen Durchlass in der Gondel öffnet, der für einen umgeleiteten Strom bestimmt ist, wobei die Abdeckung (30) auch durch mindestens einen variablen Düsenabschnitt (40) verlängert ist, wobei die Düse (40) mindestens eine Platte (41) umfasst, die drehbar montiert ist, wobei die Platte (41) angepasst ist, um in mindestens eine Position zu schwenken, die für eine Variation des Abschnitts der Düse sorgt, wobei das System zum Betätigen Betätigungsmittel (60) umfasst, die imstande sind, die jeweilige Verschiebe- und Drehbewegung der Abdeckung (30) und der Platte (41) der Düse (40) zu aktivieren, wobei die Betätigungsmittel (60) mindestens ein einfach wirkendes lineares Stellglied (61) umfassen, das an das stromaufwärtige Ende der Platte (41) angeschlossen ist und das System zum Betätigen weiter stromabwärtige Verriegelungsmittel (80) der Düse (40) und der Abdeckung (30) umfasst, wobei die stromabwärtigen Verriegelungsmittel (80) mindestens zwei umkehrbare Zustände umfassen, wobei der eine der Zustände ein verriegelter Zustand ist, bei dem die stromabwärtigen Verriegelungsmittel (80) angepasst sind, um die Platte (41) der Düse (40) in einer Position zur Variation des Düsenausgangsabschnitts mit der Abdeckung (30) zu verriegeln.

2. Baugruppe nach Anspruch 1, **dadurch gekennzeichnet, dass** die stromabwärtigen Verriegelungsmittel (80) im Direktstrahl und in den Phasen der Variation eines Düsenabschnitts (40) in einem entriegelten Zustand, und umgekehrt im umgekehrten Strahl in einem verriegelten Zustand sind, um das Verschieben der Düse (40) mit der Abdeckung (30) nach stromabwärts der Gondel zu ermöglichen.

3. Baugruppe nach einem der Ansprüche 1 bis 2, **dadurch gekennzeichnet, dass** sie weiter stromaufwärtige Verriegelungsmittel (70) umfasst, die mindestens zwei umkehrbare Zustände umfassen, wobei der eine der Zustände ein verriegelter Zustand ist, bei dem die stromaufwärtigen Verriegelungsmittel (70) angepasst sind, um die Abdeckung (30) in einer Schließposition zu halten, die fest mit einer feststehenden Struktur der Gondel verbunden ist.

4. Baugruppe nach einem der Ansprüche 1 bis 3, **dadurch gekennzeichnet, dass** die stromaufwärtigen Verriegelungsmittel (70) im Direktstrahl und in den Phasen einer Variation eines Düsenabschnitts (40) in einem verriegelten Zustand, und umgekehrt im umgekehrten Strahl in einem entriegelten Zustand sind, der das Verschieben der Abdeckung (30) nach stromabwärts der Gondel ermöglicht.

5. Baugruppe nach einem der Ansprüche 1 bis 4, **dadurch gekennzeichnet, dass** die Betätigungsmittel (60) imstande sind, die Verschiebebewegung der Abdeckung (30) und die Schwenkbewegung der Platte (41) der Düse (40) in eine Position zu aktivieren, die für die Variation des Abschnitts der Düse (40) unabhängig von der Bewegung der mobilen Abdeckung (30) sorgt.

6. Baugruppe nach Anspruch 5, **dadurch gekennzeichnet, dass** das lineare Stellglied (61) der Betätigungsmittel (60) eine Basis umfasst, im Inneren derer ein Stift (612) untergebracht ist, der dazu bestimmt ist, am stromaufwärtigen Ende der Platte (41) der Düse (40) fixiert zu werden.

7. Baugruppe nach einem der Ansprüche 1 bis 6, **dadurch gekennzeichnet, dass** die stromabwärtigen Verriegelungsmittel (80) teilweise auf den Betätigungsmitteln (60) montiert sind.

8. Baugruppe nach den Ansprüchen 6 und 7, **dadurch gekennzeichnet, dass** ein Mittel zum Ergreifen auf dem Stift (612) des Stellglieds (61) montiert ist und ein Haken, gegenüber, auf der Abdeckung (30) montiert ist.

9. Baugruppe nach einem der Ansprüche 1 bis 6, **dadurch gekennzeichnet, dass** die stromabwärtigen Verriegelungsmittel (80) teilweise auf der Platte (41) der Düse (40) montiert sind.

10. Baugruppe nach Anspruch 9, **dadurch gekennzeichnet, dass** ein Mittel zum Ergreifen auf einem stromaufwärtigen Ende der Platte montiert ist und ein Haken, gegenüber, auf der Abdeckung (30) montiert ist.

11. Baugruppe nach einem der Ansprüche 1 bis 10, **dadurch gekennzeichnet, dass** sie weiter Mittel zum Steuern umfasst, die imstande sind, die Betätigungsmittel (50) und die stromaufwärtigen (70) und stromabwärtigen (90) Verriegelungsmittel anzusteuern.

12. Baugruppe nach Anspruch 11, **dadurch gekennzeichnet, dass** die Mittel zum Steuern ein elektrisches System (91) umfassen, das auf einer feststehenden Struktur der Gondel montiert ist, das ein System zur Drehumlenkung (92) zu den stromabwärtigen Verriegelungsmitteln (80) antreibt.

13. Gondel eines Doppelstrahl-Turbotriebwerks, eine Baugruppe nach einem der vorstehenden Ansprüche umfassend.

## Claims

1. An assembly comprising a thrust reverser device (20) and an actuating system of said thrust reverser device (20), said device (20) comprising at least one cowl (30) mounted in translation along a direction substantially parallel to a longitudinal axis of a nacelle capable of switching alternately from a closed position in which it ensures the aerodynamic continuity of the nacelle to an open position in which it opens a passage in the nacelle for a diverted flow, said cowl 30 being also extended by at least one variable nozzle section (40), said nozzle (40) comprising at least one panel (41) movably mounted in rotation, said panel (41) being adapted to pivot toward at least one position causing a variation in the section of the nozzle, the actuating system comprising actuating means (60) capable of activating the respective displacement of the cowl (30) and the panel (41) of the nozzle (40) in translation and in rotation, where the actuating means (60) comprise at least one single-action linear actuator (61) connected to the upstream end of the panel (41) and the actuating system further comprises means (80) for locking the nozzle (40) and the cowl (30) in a downstream manner, the downstream locking means (80) comprising at least two reversible states, one of said states being a locked state in which the downstream locking means (80) are adapted to lock the panel (41) of the nozzle (40) in the position of variation in the outlet section of the nozzle with the cowl (30).

2. The assembly according to claim 1, **characterized in that** the downstream locking means (80) are in a direct jet unlocked state and during the phases of variation in the nozzle section (40) and, conversely, in a reverse jet locked state to allow displacement of the nozzle (40) with the cowl (30) downstream of the nacelle.

3. The assembly according to any of claims 1 to 2, **characterized in that** it further comprises upstream locking means (70) comprising at least two reversible states, one of said states being a locked state in which the upstream locking means (70) are adapted to maintain the cowl (30) in a closed position secured to a fixed structure of the nacelle.

4. The assembly according to any of claims 1 to 3, **characterized in that** the upstream locking means (70) are in a direct jet locked state and during the phases of variation in the nozzle section (40) and, conversely, in a reverse jet unlocked state allowing displacement of the cowl (30) downstream of the nacelle.

5. The assembly according to any of claims 1 to 4, **characterized in that** the actuating means (60) are capable of activating the displacement in translation of the cowl (30) and the pivoting of the panel (41) of the nozzle (40) toward a position causing the variation in the nozzle section (40) regardless of the displacement of the movable cowl (30).

6. The assembly according to claim 5, **characterized in that** the linear actuator (61) of the actuating means (60) comprises a base inside which is housed a rod (612) intended to be fastened to the upstream end of the panel (41) of the nozzle (40).

7. The assembly according to any of claims 1 to 6, **characterized in that** the downstream locking means (80) are mounted, in part, on the actuating means (60).

8. The assembly according to claims 6 and 7, **characterized in that** a gripping means is mounted on the rod (612) of the actuator (61) and a hook is mounted, oppositely, on the cowl (30).

9. The assembly according to any of claims 1 to 6, **characterized in that** the downstream locking means (80) are mounted, in part, on the panel (41) of the nozzle (40).

10. The assembly according to claim 9, **characterized in that** a gripping means is mounted on an upstream end of the panel and a hook is mounted, oppositely, on the cowl (30).

11. The assembly according to any of claims 1 to 10, **characterized in that** it further comprises control means capable of piloting the actuating means (50) and the upstream (70) and downstream (90) locking means.

12. The assembly according to claim 11, **characterized in that** the control means comprise an electrical system (91) mounted on a fixed structure of the nacelle driving a rotary return system (92) toward the downstream locking means (80).

13. A bypass turbojet engine nacelle comprising an assembly according to any of the preceding claims.
